# EUROPEAN PATENT SPECIFICATION

(11) **EP 1 803 637 B1**
(45) Date of publication and mention of the grant of the patent: **30.05.2012**
(21) Application number: 06023671.8
(22) Date of filing: 14.11.2006
(51) Int. Cl.: B62K 19/38, B62L 3/04, B62K 23/08

(54) **Arrangement structure of brake control device for motorcycle**
Anordnung für Bremsaggregat am Motorrad
Aménagement d'une unité de commande de freinage sur une moto

(30) Priority: 28.12.2005 JP 2005380494
(43) Date of publication of application: 04.07.2007
(73) Proprietor: HONDA MOTOR CO., LTD., Tokyo 107-8556 (JP)
(72) Inventor: Hasegawa, Yosuke Honda R&D Co., Ltd., Wako-shi Saitama, 351-0193 (JP)
(74) Representative: Rupp, Christian

(56) References cited:
- EP-A2- 0 624 498
- EP-A2- 0 624 498
- JP-A- 2 011 448
- US-A1- 2005 061 572

## Description

The present invention relates a brake control device for a motorcycle, and more particularly to the arrangement structure of an antiskid brake unit (hereinafter referred to as ABS unit).

A motor cycle according to the preamble of claim 1 is known from EP 0 624 498 A2.

An ABS unit is a known device which automatically controls hydraulic pressure of a hydraulic brake for preventing a wheel from being locked. The ABS unit is an integral body formed of a hydraulic circuit, a pump and a valve, and is also referred to as an ABS modulator, and is a relatively large-sized and heavy part. There has been known an ABS unit which is arranged between right and left seat frames which constitute portions for supporting a seat out of a vehicle body frame.
[Patent Document 1] JP-A-10-175534

Here, in manufacturing a derived-model motorcycle by additionally arranging a brake control device such as an ABS unit to a basic-model motorcycle which preliminarily mounts a large number of parts such as the above-mentioned seat frames in the inside of a vehicle body frame, it has been necessary to carry out a large design change to ensure a space for arranging the brake control device. Accordingly, it is an object of the present invention to provide the structure which does not require a large design change in additionally mounting a brake control device on a base model motorcycle.

To solve the above-mentioned problem, the invention of claim 1 on the arrangement structure of a brake control device for a motorcycle is directed to a motorcycle including a vehicle body frame which supports an engine and a hydraulic brake, and mounts a brake control device which controls hydraulic pressure of the brake on the vehicle body frame, wherein the brake control device is arranged below a pivot shaft which swingably mounts a front end of a rear arm which supports a rear wheel at a rear end thereof on the vehicle body frame.

The invention described in claim 3 is, in the above-mentioned claim 1, characterized in that the motorcycle includes a drive shaft which drives the rear wheel, and the brake control device is arranged below the drive shaft.

The invention described in claim 3 is, in the above-mentioned claim 2, characterized in that the engine is a V-type engine having a longitudinally-extending bank,
an air-cleaner cover projecting toward an outside is arranged on one side of the vehicle body, and
the brake control device projecting toward an outside is arranged on another side of the vehicle body.

The invention described in claim 4 is, in the above-mentioned claim 3, characterized in that the motorcycle includes a cover which covers the brake control device, and at least one of a wind introducing hole or an wind discharging hole is formed in the cover.

The invention described in claim 5 is, in the above-mentioned claim 4, characterized in that a joining portion is provided between the engine and the brake control device in a state that the joining portion surrounds the center of gravity of the engine as viewed in a side view thus arranging the brake control device at a position where the brake control device is overlapped with the center of gravity as viewed in a side view.

According to claim 1, although a space below a pivot shaft has been conventionally considered as a dead space in which parts are difficult to arrange to prevent the parts from interfering with a suspension device such as a rear arm, a drive force transmission device such as a chain or a drive part such as a rear wheel, it becomes possible to arrange the brake control device below the pivot shaft.
Accordingly, the brake control device can be mounted on the motorcycle without adding a large change to the basic model which constitutes a base of the vehicle. Further, the brake control device which is a heavy object can be arranged at a comparatively low position thus contributing to the lowering of the center of gravity of the vehicle.

According to claim 2, the dead space can be further effectively utilized. That is, in adopting the chain drive structure as a drive means, when the brake control device is arranged below a chain line, the brake control device interferes with a chain and sprocket wheels and hence, it is necessary to offset the chain line and the brake control device in the right and left directions respectively. However, the chain and the sprocket wheels become no more necessary by adopting the shaft driving and hence, it is possible to effectively make use of a space which cannot be utilized in a conventional chain-drive-type vehicle thus suppressing the increase of a vehicle width.

. According to claim 3, due to the provision of the air cleaner cover and the brake control device, it is possible to make the difference between air flows at right and left sides of the vehicle.

According to claim 4, it is possible to efficiently cool the brake control device.

According to claim 5, by providing the joining portion in the vicinity of the center of gravity which becomes the center of vibration of the engine and by arranging the brake control device to be overlapped to the center of gravity, it is possible to minimize the influence of the vibrations of the engine which the brake control device receives. Accordingly, a mount between the brake control device and the engine and the mount structure between the engine and a frame can be made small and light-weighted.
Fig. 1 shows a left side view of a motorcycle according to a first embodiment.
Fig. 2 shows a plan view of the motorcycle.
Fig. 3 shows a perspective view of an engine and a vehicle body frame portion.
Fig. 4 shows a perspective view of a vehicle body frame and an ABS unit portion.
Fig. 5 shows a perspective view showing a mounting state of the ABS unit.
Fig. 6 shows a left side view of a motorcycle according to a not claimed embodiment.
Fig. 7 shows a plan view of the motorcycle.
Fig. 8 shows an enlarged left side view of an engine portion.
Fig. 9 shows a plan view showing a mounting state of an ABS unit portion.
Fig. 10 shows a perspective view of the ABS unit.

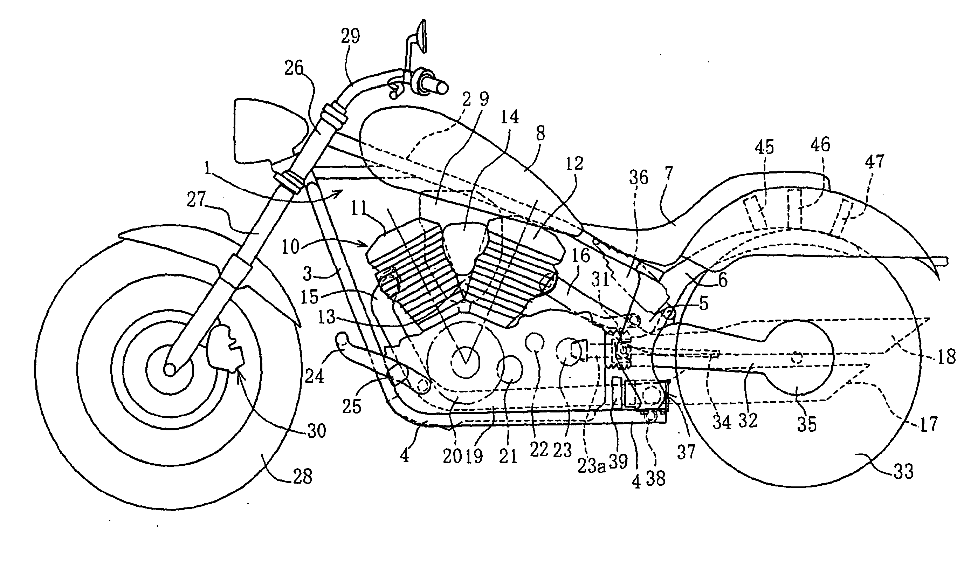

Hereinafter, an embodiment is explained in conjunction with drawings. Fig. 1 is a side view of a motorcycle according to the first embodiment in which an ABS unit is arranged below a pivot. A vehicle body frame 1 of the motorcycle includes a main pipe 2, a down pipe 3, a lower pipe 4 and a center frame 5 and forms an approximately quadrangular frame shape as viewed in a side view.

The center frame 5 extends further rearwardly from a connecting portion thereof with the main pipe 2 thus forming seat stays 6 and a seat 7 is supported on the seat stays 6. A fuel tank 8 is supported on the main pipe 2 in front of the seat 7. An air cleaner 9 and a V-type engine 10 are arranged below the fuel tank 8.

The V-type engine 10 is supported on the vehicle body frame 1. The air cleaner 9 is provided in a V bank 13 which is a V-shaped space formed by a front cylinder 11 and a back cylinder 12. A carburetor casing 14 of the air cleaner 9 is arranged on a left side of the vehicle body shown in the drawing. The respective cylinders suck an air-fuel mixture from the fuel tank 8 and the air cleaner 9 which are disposed above the cylinders and discharge an exhaust gas from exhaust pipes 15, 16. The exhaust pipes 15, 16 extend to the right side of the vehicle body and are connected to mufflers 17, 18.

In the drawing, numeral 19 indicates a crankcase, numeral 20 indicates a crankshaft, numeral 21 indicates a main shaft, numeral 22 indicates a counter shaft, and numeral 23 indicates an output shaft gear. Numeral 24 indicates a change pedal which is pivotally mounted on a side surface of a front lower portion of the crankcases 19. Numeral 25 indicates a step which is mounted on the down pipe 3 in the vicinity of the change pedal 24. Here, all of these shafts are generally and schematically illustrated and, in the actual constitution, gears which are mounted on these shafts are meshed with each other to form a gear train, and a rotational force is sequentially transmitted.

A head pipe 26 is mounted on a front end portion of the vehicle body frame 1, an upper portion of a front fork 27 is rotatably supported on the head pipe 26, and a front wheel 28 which is supported on a lower end of the front fork 27 is steered by a handle 29 which is connected to an upper end portion side of the front fork 27. Numeral 30 indicates a front wheel brake and is constituted of a hydraulic disc brake.

A front end portion of a rear arm 32 is rockingly supported on the center frame 5 by a pivot shaft 3i. A rear wheel 33 is supported on a rear end of the rear arm 32 and the rear wheel 33 has a shaft thereof driven by way of a drive shaft 34 and a gear box 35 which are mounted on the rear arm 32. A rotational drive force is transmitted to the drive shaft 34 by way of an output shaft 23a. A hydraulic rear-wheel brake is also provided to the rear wheel 33 although not shown in the drawing. A rear cushion unit 36 is mounted on a longitudinally intermediate portion between the rear arm 32 and the main pipe 2.

An ABS unit 37 is arranged below the pivot shaft 31 as viewed in a side view. The ABS unit 37 is disposed in the inside of an inner space of the center frame 5 and is supported on a cross pipe 38 which is mounted on a rear end portion of the lower pipe. Numeral 39 indicates a rear master cylinder of the rear wheel brake.

The ABS unit 37 is a known antilock brake (ABS) device which automatically prevents locking of a wheel based on detection information such as a vehicle speed or the like. The front-wheel ABS, when the front wheel is about to be locked, automatically controls the operation of the front-wheel brake 30 by controlling hydraulic pressure of the front-wheel brake 30 thus preventing the front wheel 28 from being locked.

The ABS unit 37 of this embodiment is a front-and-rear-wheel ABS system and is, although not shown in the drawing, connected with the front-wheel brake 30 and the rear-wheel brake by hydraulic pipes respectively. The hydraulic pipe on the front-wheel brake 30 side is constituted of a pipe from a front master cylinder (described later) and a pipe between calipers of the front-wheel brake 30 and the latter pipe is constituted of a pressure-decrease-side pipe and a pressure-increase-side pipe. The pressure-decrease-side pipe is provided for allowing the return of a working oil to decrease the hydraulic pressure from the calipers and the pressure-increase-side pipe is provided for increasing the hydraulic pressure by supplying pressurized oil to the calipers. The rear-wheel brake side also adopts the substantially equal pipe connection and the pipe connection is arranged between the calipers of the rear-wheel brake and the rear master cylinder 39.

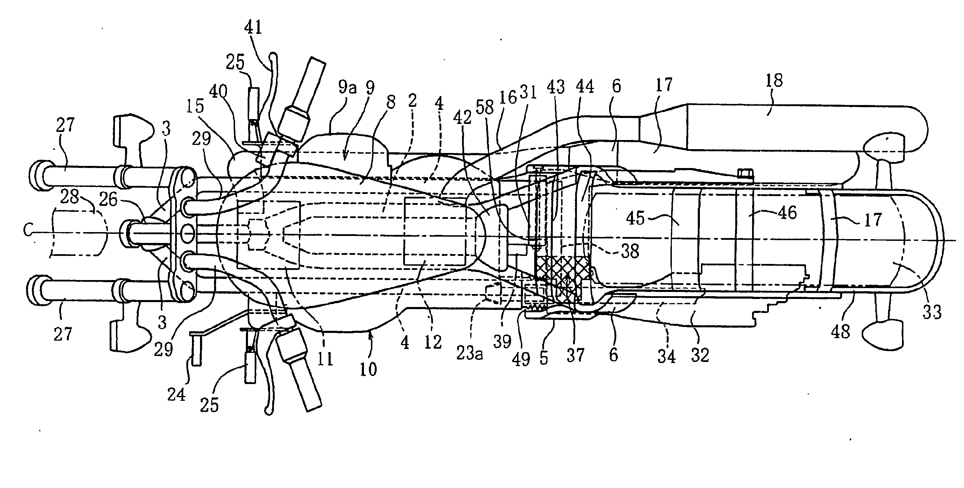

Fig. 2 is a plan view of the motorcycle (seat being omitted). With respect to the vehicle body center C, the front forks 27, the steps 25, the handles 29, the lower pipes 3, the center frames 5 and the seat stays 6 are provided in right-and-left pairs respectively. Further, the main pipe 2 also has a rear half side thereof starting from a longitudinally middle portion thereof formed in a right-and-left pair.

Exhaust-system parts which are constituted of the exhaust pipes 15, 16 and the mufflers 17, 18 and the air cleaner 9 are arranged in a projecting manner to the right side of the vehicle body. The ABS unit 37 is arranged in an offset manner to the left side of the vehicle body. The rear master cylinder 39 is also arranged on the left side of the vehicle body and is positioned between a rear end of the crankcase 19 and the ABS unit 37.

In the drawing, numeral 40 indicates a front master cylinder which is arranged in the vicinity of a right brake lever 41 of the right-side handle 29 and generates hydraulic pressure upon manipulation of a right brake lever 41. Numerals 42, 43 indicate cross plates which is provided between the right and left main pipes 2, numeral 43 indicates a cross plate which is provided between right and left center frame upper ends, and numerals 44, 45, 46 indicate cross plates which are provided between the right and left seat stays 6. Right and left rear ends of the seat stays 6 are connected with each other by the approximately U-shaped member 48 as viewed in a plan view.

A joint rubber boot 49 is mounted on a joint portion of the drive shaft which is provided to a left-side front end portion of the rear arm 32 and covers the joint portion connecting the drive shaft 34 and the output shaft 23a.

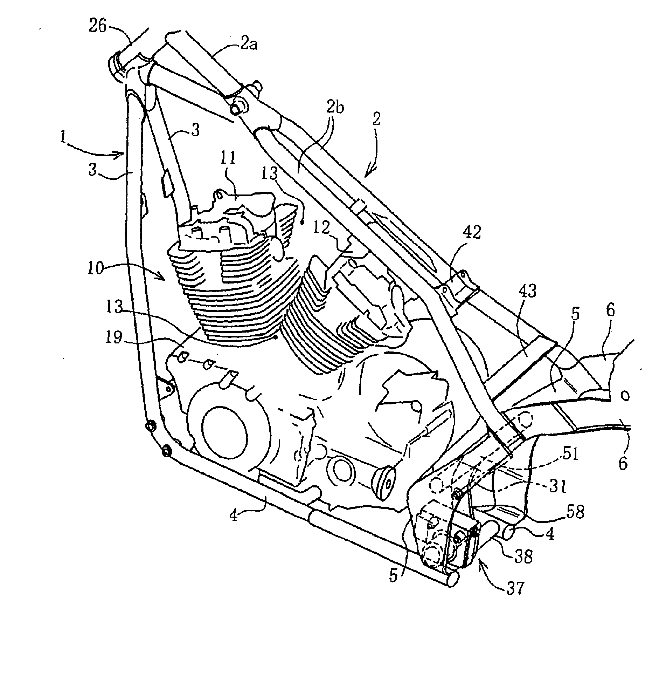

Fig. 3 is a perspective view showing portions corresponding to the vehicle body frame 1 and the V-type engine 10. Here, the air cleaner 9 is omitted. The main pipe 2 is constituted of one front portion 2a which is arranged along the vehicle body center and two rear portions 2b which are formed by bifurcating in a right-and-left pair which extend substantially in parallel with each other.
The right and left intermediate portions in the longitudinal direction of the rear portion 2b are connected to each other by the cross plate 42.

A front end of the rear cushion unit 36 (Fig. 1) is supported on the cross plate 42. The right and left rear portions 2b extend further rearwardly while expanding in right-and-left direction from the cross plate 42 and are welded to outer sides of the respective shoulder portions of the right and left center frames 5.

The center frame 5 is a plate-like member formed by a suitable method such as casting using a suitable material having rigidity such as various kinds of metals such as light alloy and is continuously and integrally formed with the seat stays 6. Using a portion where the rear ends of the main pipe 2 are connected as a boundary, a portion of the center frame 5 above the border is bent and extends rearwardly to constitute the seat stays 6.

The right and left center frames 5 have intermediate portions thereof connected by an upper cross pipe 51, and lower end portions thereof respectively welded to rear end portions of the right and left lower pipes 4. The right and left rear end portions of the lower pipe 4 are connected by a lower cross pipe 38. A vertical frame 58 is extended between respective vehicle-width-direction intermediate portions of the upper cross pipe 51 and the lower cross pipe 38. Between respective vertically intermediate portions of the vertical frame 58 and the center frame 5 on the right side of the vehicle body, a pivot shaft 31 is extended and supported in parallel to and below the upper cross pipe 51. Due to these vehicle body frame-side members, a space 50 whose right and left sides are surrounded by the center frame 5 and the vertical frame 58, and whose upper and lower sides are surrounded by the upper cross pipe 51 and the lower cross pipe 38 is defined. The ABC unit 37 is arranged by making use of the space 50.

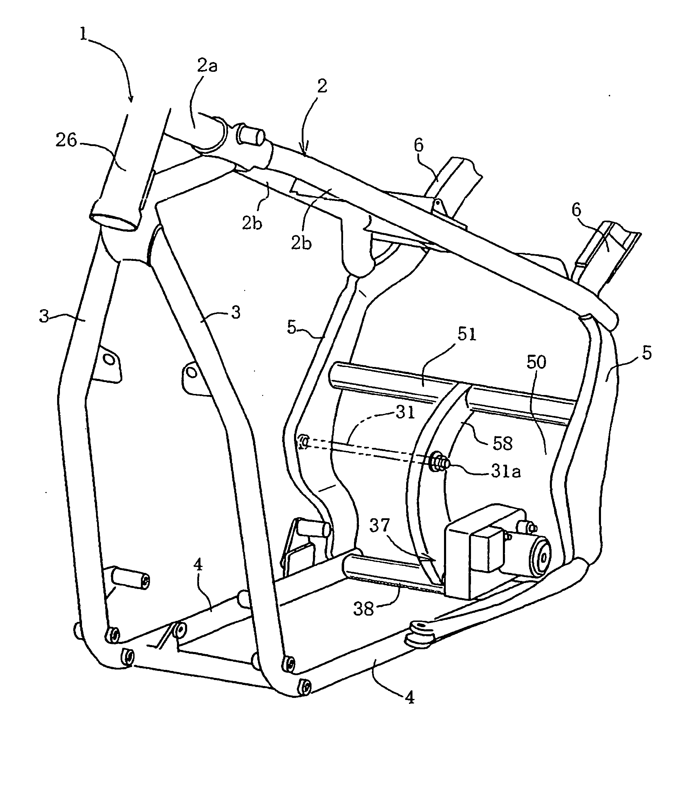

Fig. 4 is a perspective view showing the vehicle body frame 1 and the ABS unit 37 from a front side. Right and left center frames 5 are connected with each other by an upper cross pipe 51 above the pivot shaft 31. The ABS unit 37 is supported on the lower cross pipe 38 at a position offset to the left side of the vehicle body. The pivot shaft 31 is formed in an elongated bolt shape, and a distal end of the pivot shaft 31 which is inserted from the center frame 5 on the right side of the vehicle body penetrates the vertical frame 58 and is fastened by a nut 31a.

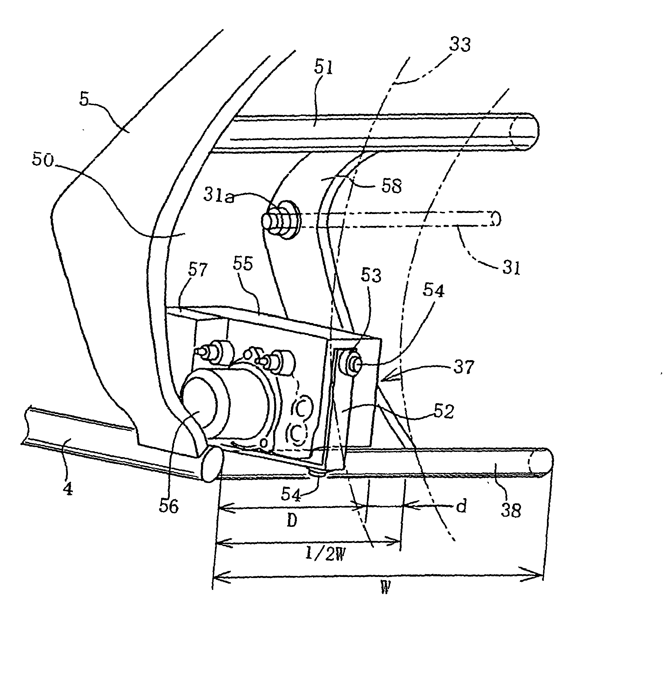

Fig. 5 is a perspective view showing the ABS unit 37 in a state that the ABS unit 37 is supported on the vehicle body frame side as viewed from a vehicle body rear side. The ABS unit 37 is mounted in a vibration controlling manner on an L-shaped bracket 52 which is mounted on a lower cross pipe 38 in a suitable manner using a bolt 54 by way of a vibration control rubber 53.

In such a mounting of the ABS unit 37, the ABS unit 37 is detachably mounted at three points in total consisting of one point at an upper end side in the vertical direction and two (front and rear) points in the horizontal direction (only showing the point on the rear end side in the drawing).
The ABS unit 37 is constituted of a rectangular parallelepiped body portion 55, a cylindrical portion 56 which houses a pump and a valve portion 57 such as a solenoid valve, and is a relatively large-sized and heavy member.

With respect to the mounting position of the ABS unit 37 on the lower cross pipe 38, the ABS unit 37 is arranged close to a vehicle-body-left-side end portion of the lower cross pipe 38. Assuming a distance from the vehicle-body-left-side end portion of the lower cross pipe 38 to a portion which forms an innermost vehicle-body width of the ABS unit 37 as D and a width of the lower cross pipe 38 as W, a widthwise intermediate point, that is, a position which becomes the center of the vehicle body is a point at a position away from the end portion by a distance 1/2W. The ABS unit 37 is offset to the vehicle-body left side by a size d (d<1/2W) with respect to this point thus taking a weight balance with parts (mainly exhaust-system parts) which are arranged to a right side of the vehicle body in an offset manner.

A mounting height of the ABS unit 37 is set to a height which prevents the ABS unit 37 from interfering with a front end portion of the rear arm 32 (Fig. 1) even when the front end portion is rocked about the pivot shaft 31. As shown in Fig. 1, the position of the pivot shaft 31 is arranged at a height substantially equal to a height of an output shaft 23a which is positioned on an upper side of the crankcase 19 and hence, a sufficiently large space 50 is formed below the pivot shaft 31, and the ABS unit 37 is arranged by making use of this space 50 in a state that the ABS unit 37 does not interfere with the rear arm 32.

Further, the ABS unit 37 is arranged at a lower position below the pivot shaft 31 as viewed in a side view and hence, the rear wheel 33 which is positioned behind the ABS unit 37 assumes a rearwardly escaping or retracting position thus preventing the interference of the ABS unit 37 with the rear wheel 33 while extending the ABS unit 37 more or less rearwardly from the lower cross pipe 38.

Next, the manner of operation of this embodiment is explained. The space below the rear arm has been considered as a space which is difficult to utilize in the arrangement of parts conventionally for preventing the interference of these parts with a suspension device such as the rear arm or drive parts such as a chain and the rear wheel. However, by arranging the ABS unit 37 below the pivot shaft 31, it is possible to arrange the ABS unit 37 by effectively making use of the space 50 below the pivot shaft 31 which has been considered as the space which is difficult to utilize conventionally.

Accordingly, assuming the constitution which is obtained by removing the ABS unit 37 from the motorcycle shown in Fig. 1 and Fig. 2 as a basic model, it is possible to additionally mount the ABS unit 37 without adding a large change to the base model thus easily manufacturing a derived model having the ABS unit 37 without adding a large change to the vehicle body structure or the like.

Further, by adopting the shaft driving which uses the drive shaft 34, it is possible to further effectively make use of the dead space. That is, with respect to a case in which the drive means adopts the chain drive structure, when the brake control device is arranged below the chain line, the chain and a sprocket wheel interfere with each other and hence, it is necessary to offset the chain line and the brake control device in the lateral direction. In the present invention, by adopting the shaft driving, the chain and the sprocket become no more necessary and hence, a space which cannot be effectively used in the conventional chain-driving-type vehicle can be effectively utilized thus suppressing the increase of the vehicle width.

Further, exhaust-system parts such as mufflers 17, 18 which are heavy objects and the ABS unit 37 are arranged laterally in a distributed manner with the vehicle body center C sandwiched therebetween and hence, it is possible to optimize the weight distribution of the vehicle body in the lateral direction.
Further, the ABS unit 37 which is the heavy object can be arranged at a relatively low position and hence, the arrangement also contributes to the lowering of the center of gravity of the vehicle.

Next, the second embodiment which arranges an ABS unit on an engine side is explained. Here, a vehicle body to which the ABS unit is applied is equal to the vehicle body shown in Fig. 1 and Fig. 2.

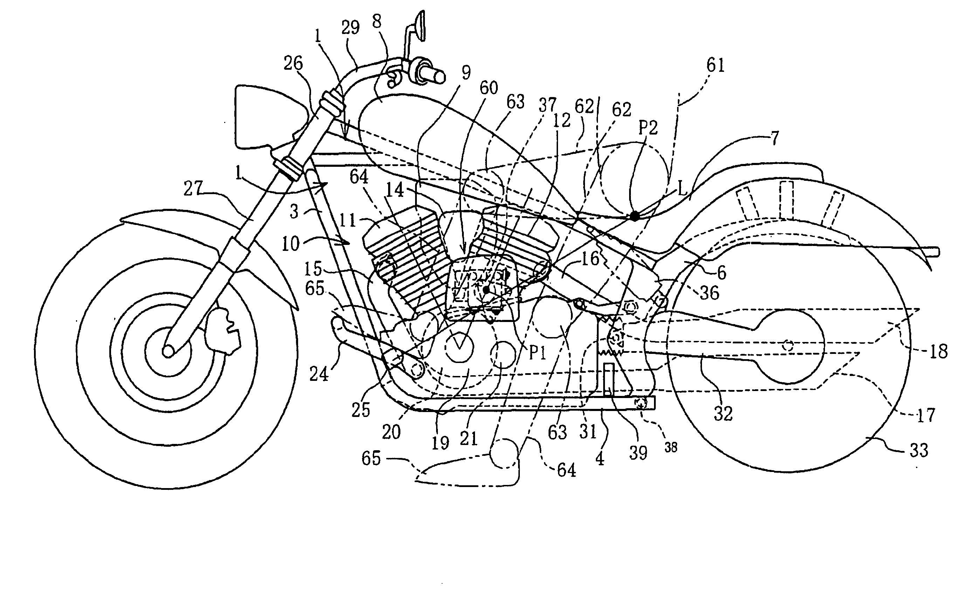

Fig. 6 is a side view of the vehicle body. In this embodiment, the ABS unit 37 is arranged on a side of a lower portion of a V bank 13 which is formed by a front cylinder 11 and rear cylinder 12. The ABS unit 37 has a periphery thereof excluding respective cylinder side covered with a unit cover 60. The unit cover 60 is described in detail later.

A position of the ABS unit 37 is set such that, as viewed in a side view shown in the drawing, a maximum side projecting point P1 of the ABS unit 37 (corresponding to a distal end portion of the cylindrical portion 56 in this embodiment) is arranged in front of a straight line L which connects a sitting reference point P2 of a seat 7 and the center of a step 25 in a using state as viewed in a side view. The sitting reference point P2 of the seat 7 is a lowermost portion of an upper-side profile line which is formed by a top portion of a surface of the seat 7 in the widthwise direction and extends in the longitudinal direction. The sitting reference point P2 is of a sitting reference point of a rider's seat which is a front seat in case of a tandem seat.

With respect to a standard riding posture of a rider 61 during traveling, the rider 61 assumes a posture in which the rider 61 bends a leg portion 62, a knee 63 is disposed on a side of a fuel tank 8 and above an air cleaner 9, an under-the-knee portion 64 obliquely traverses a side of the front cylinder 11, and a leg 65 is placed on the step 25. When the motorcycle is stopped, the leg portion 62 is extended, and a leg 65 is moved to an opposite side getting over the straight line L and is landed.

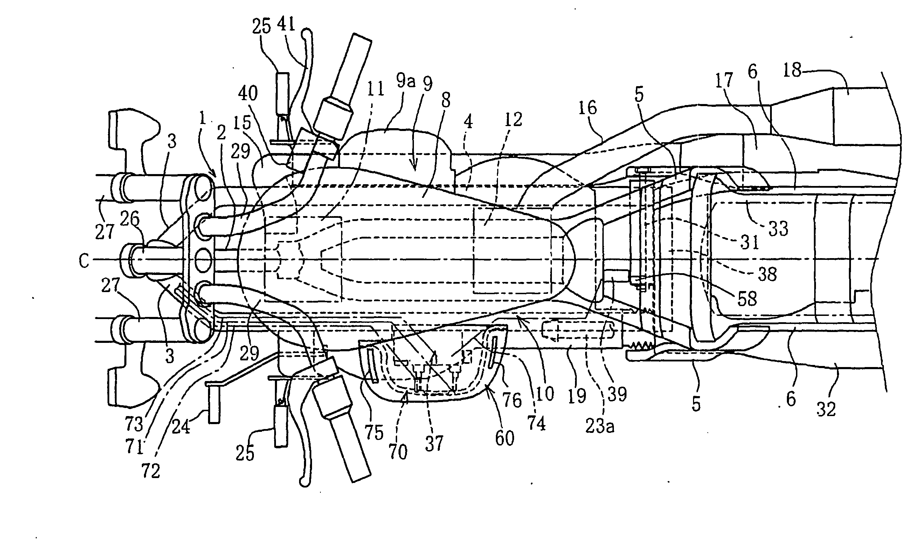

Fig. 7 is a plan view of the vehicle body. With respect to the vehicle body center C, exhaust-system parts which are constituted of exhaust pipes 15, 16 and mufflers 17, 18 and the air cleaner 9 are arranged on a right side of the vehicle body in a projecting manner, while the ABS unit 37 is arranged at a position which projects leftwardly from a longitudinal intermediate portion of the fuel tank 8. The position where the ABS unit 37 is provided is arranged on a left side of the V bank 13.

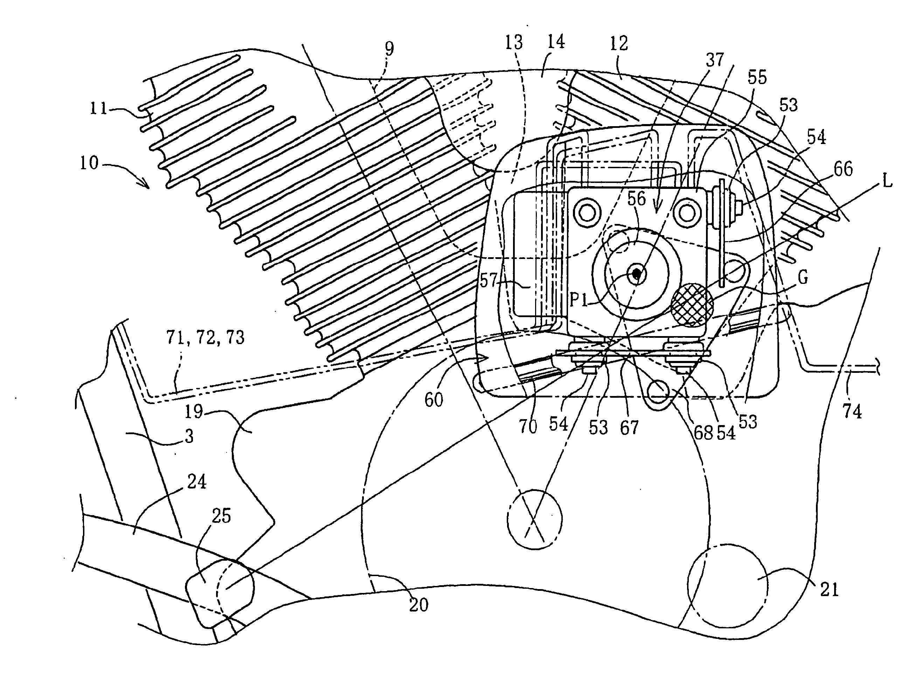

Fig. 8 is a side view of the vehicle body and is a view showing the side surface of a V-type engine 10 in an enlarged manner. The position of the ABS unit 37 is arranged on a side of the V bank 13 and, to be more accurate, on a left side of a lower portion of the rear cylinder 12. This position, since the rear cylinder 12 is offset to the right side of the vehicle body with respect to the front cylinder 11 as can be clearly understood by reference to Fig. 3, provides a relatively large space which is formed behind the front cylinder 11.

The arrangement space of the ABS unit 37 which is formed behind the front cylinder 11 and on the left side of the rear cylinder 12 is a space which is formed by offsetting the front and rear cylinders in the widthwise direction from each other and is a relatively large space which is formed between a front-side profile line of the front cylinder 11 and a rear-side profile line of the rear cylinder 12 as viewed in a side view, wherein the arrangement space of the ABS unit 37 is communicated with a relatively narrow V-shaped valley which is directly formed by opposedly facing surfaces of the front cylinder 11 and the rear cylinder 12.

The V-shaped bank 13 of the present invention includes both of the relatively wide space and the relatively narrow V-shaped valley. Further, a state in which the ABS unit 37 is arranged in the relatively wide space constitutes a mode of a state in which the ABS unit 37 is arranged between the V banks. Here, the ABS unit 37 is arranged in the relatively wide space and, at the same time, the ABS unit 37 is arranged in the relatively small V-shaped valley in a partially overlapped manner as viewed in a side view.

Further, as can be clearly understood from Fig. 8, with respect to the position of the ABS unit 37, the ABS unit 37 is arranged directly above the crankshaft 20 and has a portion thereof also overlapped to a center line of a main shaft 21 which is positioned behind the crankshaft 20. Symbol G indicates a position of the center of gravity of the engine 10. The center P1 of the ABS unit 37 is positioned in front of, slightly above and in the vicinity of the center of gravity G.

To explain a mounting state of the ABS unit 37, a rear end surface of a quadrangular body portion 55 as viewed in a side view is supported on a vertically arranged stay 66 by way of a vibration control rubber 53 at one point in a vibration controlling manner, and a lower surface of the body portion 55 is supported on a laterally arranged stay 67 in the same manner by way of vibration rubbers 53 at two positions in a vibration controlling manner. The vibration control rubbers 53 are substantially equal to the vibration control rubbers used in the above-mentioned embodiment and are fastened to the body portion 55 and the respective stays 66, 67 respectively using bolts 54.

The vertically arranged stay 66 and the laterally arranged stay 67 are respectively integrally formed with an approximately triangular mounting bracket 68, and the mounting bracket 68 is fastened to a side surface of a lower portion of the rear cylinder 12 and a side surface of an upper portion of a crankcase 19 using bolts or the like. With respect to the center of gravity G of the engine, a lower portion side of the ABS unit 37 is surrounded by a protective member 70 which is inclined obliquely in the rearward and upward direction as viewed in a side view and traverses in the longitudinal direction. Both longitudinal ends of the protective member 70 are fastened to an upper portion of the crankcase 19 together with a fastening portion of a crankcase cover. An upper portion side of a unit cover 60 is overlapped to respective lower portions of the front cylinder 11 and the rear cylinder 12 on the side of the V bank 13, while a lower portion of the unit cover 60 is overlapped to a side surface of an upper portion of the crankcase 19.

In the drawing, numeral 71 indicates a pipe which is connected to a front master cylinder 40 (Fig. 7), and numerals 72, 73 indicate pipes for depressurizing and pressurizing which are connected to a front-wheel brake 30 (Fig. 6). These pipes 71 to 73 extend toward a front portion of the vehicle body and are bent upwardly, and arranged upwardly toward a head pipe 26 along a down pipe 3.

The pipes 72 and 73 for depressurizing and pressurizing extend downwardly toward the front-wheel brake 30 from the vicinity of a head pipe 26 along a front fork 27.
Numeral 74 indicates a pipe which is connected to a rear master cylinder 39 (Fig. 7) and extends rearwardly toward a rear master cylinder 38.

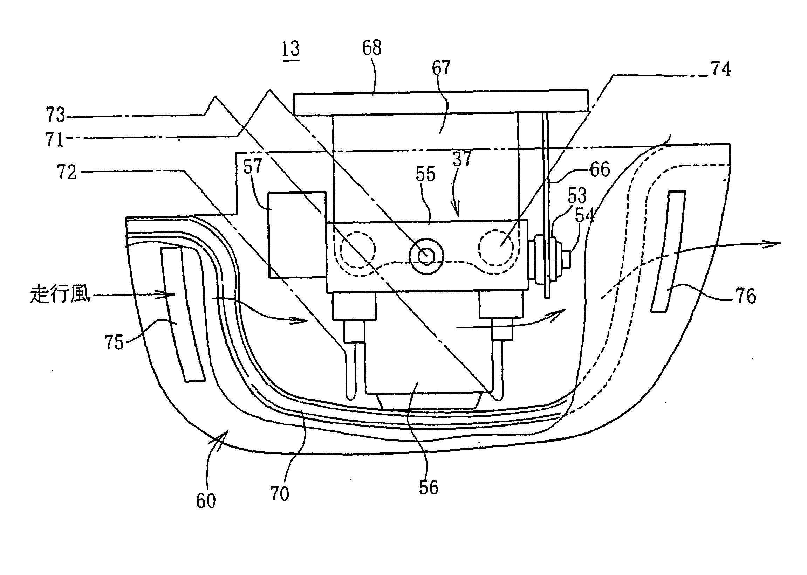

Fig. 9 is a plan view of the unit cover 60 and the ABS unit 37 in a mounting state. As shown in this drawing, the unit cover 60 has a container shape which is opened toward the V-type engine 10 side which surrounds a periphery of the ABS unit 37 and is formed of a suitable material such as metal or a resin.

A surface of the unit cover 60 can be arbitrarily formed such as a spherical shape, a curved shape or a planner shape which can be easily formed and can easily increase a volume thereof. By forming the surface of the unit cover 60 into the curved surface or a spherical surface, it is possible to reduce the resistance of a traveling wind.

A slit-like wind introducing opening 75 and a wind discharging opening 76 are formed in a front surface and a back surface of the unit cover 60, wherein the unit cover 60 takes a traveling wind into the inside of the unit cover 60 through the front-side wind introducing opening 75 and discharges the traveling wind rearwardly through the rear-side wind discharging opening 76 thus cooling the ABS unit 37 which is liable to be easily elevated to a high temperature during an operation thereof.

Here, at least one of the wind introducing opening 75 and the wind discharging opening 76 is formed in the unit cover 60. This is because that even with only one of these openings, the ventilation in the inside of the unit cover 60 is enhanced thus enabling the cooling of the ABS unit 37. Further, a plural number of wind introducing openings 75 and wind discharging openings 76 may be formed in suitable portions of the unit cover 60.

The protective member 70 surrounds the ABS unit 37 in a substantially arcuate shape ranging from a front portion to a rear portion by way of an outer side of the ABS unit 37. The unit cover 60 is integrally formed with the protective member 70 and is supported on the crankcase 25 by way of the protective member 70.

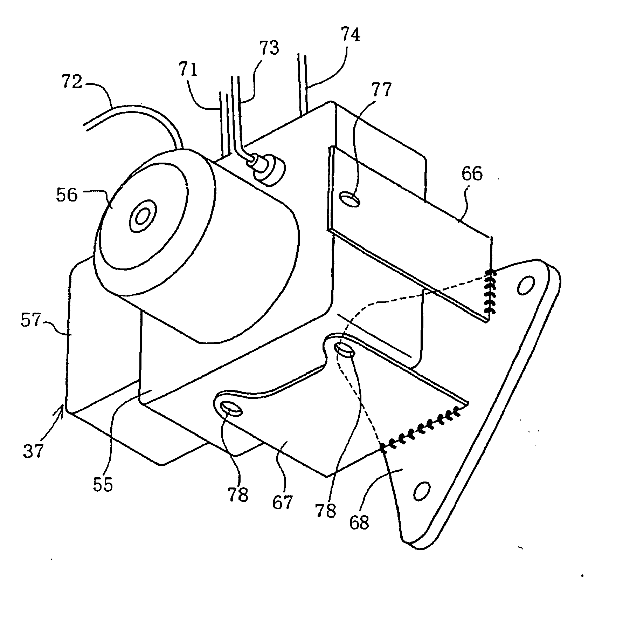

Fig. 10 is an enlarged perspective view of the ABS unit 37. The vertically arranged stay 66 and the laterally arranged stay 67 are welded to the mounting bracket 68 in a state that both stays 66, 67 are perpendicularly erected with respect to the mounting bracket 68, the vibration control rubbers 53 (Fig. 8) are fitted into mounting holes 77, 78, and both the stays are mounted in a vibration controlling matter via the vibration control rubber 53.

Next, the manner of operation of this embodiment is explained. Since the ABS unit is arranged in the side space of the front cylinder 11 and the rear cylinder 12 of the engine 10 which has not been utilized for arrangement of parts and has been considered as a dead space conventionally, it is possible to easily arrange the ABS unit 37 by making use of the dead space. Accordingly, it is possible to easily mount the ABS unit 37 on the vehicle without adding a large change to a base model which is not provided with the ABS unit 37.

Further, by arranging exhaust-system parts including mufflers 17, 18 which are heavy objects on the right side of the vehicle body and by arranging the ABS unit 37 on the left side of the V bank 13 which is arranged on the left side of the vehicle body with the vehicle body center C sandwiched between the exhaust-system parts and the ABS unit 37, it is possible to arrange these heavy objects in the laterally distributed manner and hence, the weight distribution of the vehicle body in the lateral direction can be optimized.

Further, a cover 9a of the air cleaner 9 projects to the right side of the vehicle body and the unit cover 60 projects leftwardly to the left side of the vehicle body and hence, the vehicle receives the traveling wind at right and left sides of the vehicle body in the substantially same manner whereby the difference in the flow of air at right and left sides of the vehicle body can be decreased.

Further, by forming the wind introducing opening 75 in the front surface of the unit cover 60 and the wind discharging opening 76 in the back surface of the unit cover 60, it is possible to introduce the traveling wind into the space defined inside the unit cover 60 for cooling the ABS unit 37 and hence, the ABS unit 37 which is liable to be easily elevated to a high temperature due to an operation thereof can be efficiently cooled.

Further, by interposing the mounting bracket 68 between the ABS unit 37 and the engine 10 as the joining portion and by allowing the mounting bracket 68 to surround the center of gravity G of the engine 10 so as to arrange the joining portion of the ABS unit 37 in the vicinity of the center of gravity G, it is possible to make the ABS unit 37 overlapped to the center of gravity G as viewed in the side view.

Accordingly, it is possible to arrange the ABS unit 37 which is the heavy object in the vicinity of the center of gravity G which becomes the center of vibration of engine 10 and hence, the influence of engine vibrations transmitted to the ABS unit 37 can be minimized. Accordingly, the vibration control mounting structure between the ABS unit 37 and the engine 10 and the vibration control mounting structure between the engine 10 and the vehicle body frame 1 can be miniaturized.

Further, since the ABS unit 37 is arranged directly above the crankshaft 20 as viewed in a side view, it is possible to arrange the ABS unit 37 at a position directly above the crankshaft 20 which constitutes the position of the center of gravity in the longitudinal direction of the whole vehicle body thus realizing the concentration of the mass.

Further, by arranging the maximum side projecting point P1 of the ABS unit 37 in front of the straight line L which connects the sitting reference point P2 of the seat and the step 25 as viewed in a side view, it is possible to afford the relatively large degree of freedom to the landing position of the legs 65 on right and left sides of the vehicle body.

Here, the present invention is not limited to the above-mentioned embodiments and some constitutional elements may be changed in various forms. For example, the ABS unit may be applicable to any one of the front-wheel brake single use, the rear-wheel brake single use or front-rear-wheel use brake. Further, the ABS unit may be of an electrically operated unit in place besides a hydraulically operated unit . Further, although the brake control devices of the above-mentioned respective embodiments are formed of the ABS unit, the brake control units may be formed of a control unit for front-and-rear-wheel interlocking control.

Further, when the ABS unit is arranged on the side of the engine, the engine is not always the V-type engine. It is sufficient that the vehicle has the constitution which allows the utilization of the dead space on the side of the engine. Further, when the brake control device is arranged on the side of the V-type engine, the brake control device may be arranged on the front cylinder side instead of the rear cylinder side described in the embodiments. Also in this case, it is possible to make use of the space formed by offsetting the front and rear cylinders from each other in the vehicle body direction. Further, the V-type is not limited to the longitudinal V-type and may be other V-types including the vertical V-type or lateral V-type.
- 1:: vehicle body frame
- 5:: center frame
- 7:: seat
- 9:: air cleaner
- 10:: V-type engine
- 11:: front cylinder
- 12:: rear cylinder
- 13:: V bank
- 15:: exhaust pipe
- 16:: exhaust pipe
- 17:: muffler
- 18:: muffler
- 31:: pivot shaft
- 32:: rear arm
- 34:: drive shaft
- 37:: ABS unit
- 60:: unit case
- 70:: protective member
- 75:: wind introducing hole
- 76:: wind discharging hole

## Claims

1. A motorcycle with an arrangement structure of an antiskid brake unit including a vehicle body frame (1) which supports an engine (10) and a hydraulic brake (30), and mounts the antiskid brake unit (37) which controls hydraulic pressure of the brake (30) on the vehicle body frame (1), and an exhaust pipe (15, 16) which extends from the engine (10) is connected to a muffler (17, 18) which is arranged on either one of both sides of a vehicle body in a lateral direction, and the antiskid brake unit (37) is arranged on another side of the vehicle body in the lateral direction,
**characterized in that**
the antiskid brake unit (37) is arranged below a pivot shaft (31) which swingably mounts a front end of a rear arm (32) which supports a rear wheel (33) at a rear end thereof on the vehicle body frame (1).

2. A motorcycle with an arrangement structure of an antiskid brake unit according to claim 1, wherein
the motorcycle includes a drive shaft (34) which drives the rear wheel (33), and the antiskid brake unit (37) is arranged below the drive shaft (34).

3. A motorcycle with an arrangement structure of an antiskid brake unit according to any of the preceding claims, wherein
the engine (10) is a V-type engine having a longitudinally-extending bank,
an air-cleaner cover (9a) projecting toward an outside is arranged on one side of the vehicle body, and
the antiskid brake unit (37) projecting toward an outside is arranged on another side of the vehicle body.

4. A motorcycle with an arrangement structure of an antiskid brake unit according to any of the preceding claims, wherein
the motorcycle includes a cover (60) which covers the antiskid brake unit (37), and at least one of a wind introducing hole (75) or a wind discharging hole (76) is formed in the cover (60).

5. A motorcycle with an arrangement structure of an antiskid brake unit according to any of the preceding claims, wherein
a joining portion (68) is provided between the engine (10) and the antiskid brake unit (37) in a state that the joining portion (68) surrounds the center of gravity (G) of the engine (10) as viewed in a side view thus arranging the antiskid brake unit (37) at a position where the antiskid brake unit (37) is overlapped with the center of gravity (G) as viewed in a side view.

## Patentansprüche

1. Motorrad mit einer Anordnungsstruktur einer Anti-Rutsch-Bremseinheit, welches einen Fahrzeugkarosserierahmen (1) enthält, welcher einen Motor (10) und eine hydraulische Bremse (30) trägt, und welcher die Anti-Rutsch-Bremseinheit (37) auf dem Fahrzeugkarosserierahmen (1) aufnimmt, welche einen hydraulischen Druck der Bremse (30) steuert, und wobei ein Abgasrohr (15, 16), welches sich von dem Motor (10) erstreckt, mit einem Auspufftopf (17, 18) verbunden ist, welcher auf einer von beiden Seiten einer Fahrzeugkarosserie in einer lateralen Richtung angeordnet ist, und wobei die Anti-Rutsch-Bremseinheit (37) auf einer anderen Seite von der Fahrzeugkarosserie in der lateralen Richtung angeordnet ist, **dadurch gekennzeichnet, dass**
die Anti-Rutsch-Bremseinheit (37) unterhalb einer Drehwelle (31) angeordnet ist, welche ein vorderes Ende eines hinteren Arms (32) schwingend aufnimmt, welcher ein Hinterrad (33) an einem Ende davon auf dem Fahrzeugkarosserierahmen (1) lagert.

2. Motorrad mit einer Anordnungsstruktur einer Anti-Rutsch-Bremseinheit gemäß Anspruch 1, wobei das Motorrad eine Antriebswelle (34) enthält, welche das Hinterrad (33) antreibt, und wobei die Anti-Rutsch-Bremseinheit (37) unterhalb der Antriebswelle (34) angeordnet ist.

3. Motorrad mit einer Anordnungsstruktur einer Anti-Rutsch-Bremseinheit gemäß irgendeinem der vorhergehenden Ansprüche, wobei
der Motor (10) ein V-Typ-Motor ist, welcher eine sich longitudinal erstreckende Bank aufweist,
eine Luftreinigerabdeckung (9a), welche in Richtung zu einer Außenseite hervorsteht, auf einer Seite der Fahrzeugkarosserie angeordnet ist, und
die Anti-Rutsch-Bremseinheit (37), welche in Richtung zu einer Außenseite hervorsteht, auf einer anderen Seite der Fahrzeugkarosserie angeordnet ist.

4. Motorrad mit einer Anordnungsstruktur einer Anti-Rutsch-Bremseinheit gemäß irgendeinem der vorhergehenden Ansprüche, wobei das Motorrad eine Abdeckung (60) enthält, welche die Anti-Rutsch-Bremseinheit (37) abdeckt, und zumindest eines von einem Wind einlassenden Loch (75) oder einem Wind ausgebendem Loch (76) in der Abdeckung (60) gebildet ist.

5. Motorrad mit einer Anordnungsstruktur einer Anti-Rutsch-Bremseinheit gemäß irgendeinem der vorhergehenden Ansprüche, wobei
ein Verbindungsabschnitt (68) zwischen dem Motor (10) und der Anti-Rutsch-Bremseinheit (37) in einem Zustand vorgesehen ist, dass der Verbindungsabschnitt (68) den Schwerpunkt (G) des Motors (10) umgibt, gesehen in einer Seitenansicht, wobei somit die Anti-Rutsch-Bremseinheit (37) an einer Position angeordnet ist, in welcher die Anti-Rutsch-Bremseinheit (37) den Schwerpunkt (G) überlappt, gesehen in einer Seitenansicht.

## Revendications

1. Motocycle avec une structure d'agencement d'une unité de frein antipatinage incluant une ossature de caisse (1) de véhicule qui supporte un moteur (10) et un frein hydraulique (30), et embarque l'unité de frein antipatinage (37) qui régule la pression hydraulique du frein (30) sur l'ossature de caisse (1) du véhicule, et
un tuyau d'échappement (15, 16) qui s'étend depuis le moteur (10) est raccordé à un pot d'échappement (17, 18) qui est agencé sur l'un quelconque des deux côtés d'une caisse de véhicule dans une direction latérale, et l'unité de frein antipatinage (37) est agencée sur un autre côté de la caisse de véhicule dans la direction latérale,
**caractérisé en ce que**
l'unité de frein antipatinage (37) est agencée en dessous d'un arbre de pivotement (31) qui embarque avec faculté de basculement une extrémité avant d'un bras arrière (32) qui supporte une roue arrière (33) à une extrémité arrière de celui-ci sur l'ossature de caisse (1) du véhicule.

2. Motocycle avec une structure d'agencement d'une unité de frein antipatinage selon la revendication 1, dans lequel
le motocycle inclut un arbre d'entraînement (34) qui entraîne la roue arrière (33), et l'unité de frein antipatinage (37) est agencée en dessous de l'arbre d'entraînement (34).

3. Motocycle avec une structure d'agencement d'une unité de frein antipatinage selon l'une quelconque des revendications précédentes, dans lequel
le moteur (10) est un moteur en V ayant un banc s'étendant longitudinalement,
un couvercle de filtre à air (9a) faisant saillie vers un extérieur est agencé sur un côté de la caisse du véhicule, et
l'unité de frein antipatinage (37) faisant saillie vers l'extérieur est agencée sur un autre côté de la caisse du véhicule.

4. Motocycle avec une structure d'agencement d'une unité de frein antipatinage selon l'une quelconque des revendications précédentes, dans lequel
le motocycle inclut un couvercle (60) qui couvre l'unité de frein antipatinage (37), et au moins l'un d'un trou d'introduction de vent (75) ou d'un trou d'évacuation de vent (76) est formé dans le couvercle (60).

5. Motocycle avec une structure d'agencement d'une unité de frein antipatinage selon l'une quelconque des revendications précédentes, dans lequel
une portion de jonction (68) est disposée entre le moteur (10) et l'unité de frein antipatinage (37) dans un état tel que la portion de jonction (68) entoure le centre de gravité (G) du moteur (10) dans une vue latérale, agençant ainsi l'unité de frein antipatinage (37) à une position où l'unité de frein antipatinage (37) est chevauchée par le centre de gravité (G) tel qu'illustré dans une vue latérale.
